Europäisches Patentamt

(19)　European Patent Office

Office européen des brevets

(11)　EP 0 760 338 A1

(12)　EUROPEAN PATENT APPLICATION
published in accordance with Art. 158(3) EPC

(43) Date of publication:
05.03.1997 Bulletin 1997/10

(51) Int. Cl.$^6$: **B64C 39/06**, B64C 35/00,
B64C 37/00, B60F 5/02,
B63B 1/34

(21) Application number: 96902019.7

(22) Date of filing: 25.01.1996

(86) International application number:
PCT/RU96/00017

(87) International publication number:
WO 96/23693 (08.08.1996 Gazette 1996/36)

(84) Designated Contracting States:
DE ES FR GB IT

(30) Priority: 01.02.1995 RU 95101490

(71) Applicant: DEMIDOV, German Viktorovich
Kazan, 420033 (RU)

(72) Inventors:
• DEMIDOV, German Viktorovich
Kazan, 420033 (RU)
• DAVLETSHIN, Rinat Fasikhovich
Kazan, 420052 (RU)
• ZARIPOV, Damir Vazykhovich
Kazan, 420045 (RU)
• MURATOV, Ravil Fatykhovich
Kazan, 420030 (RU)
• OSIPOV, Eduard Serafimovich
Kazan, 420015 (RU)
• KUSHNAREV, Nikolai Dmitrievich
Ulyanovsk, 420000 (RU)

(74) Representative: Patentanwälte
Zellentin & Partner
Zweibrückenstrasse 15
80331 München (DE)

(54)　**VEHICLE WITH AERODYNAMIC MODULE**

(57)　A vehicle is proposed with an aerodynamic module (6) in the form of at least one toroidal rotating body. The cross section of the body in question in the plane passing through the axis (OO) of rotation has an aerodynamic profile aligned along the vehicle's direction of movement.

FIG. 9

EP 0 760 338 A1

## Description

Technical Field

This invention relates in general to transport vehicles and more specifically to devices capable of accelerating transport vehicles due to interaction of said devices with the surrounding fluid medium. The devices under consideration may be installed on ships, yachts, motor vehicles, and on any other transport vehicles, railway and airborne ones inclusive.

Background Art

One state-of-the-art water-borne vehicle (WO 94/13257) is known to comprise disk-shaped supporting elements which provide for high-speed vehicle movement with a reduced power consumption of the drive.

The water-borne vehicle under discussion comprises a hull with a top and a bottom surface, a forebody, and an afterbody. Arms, supporting a pair of disks extend from the bottom surface of the vehicle at the bow thereof. A few said disks may be provided additionally for establishing auxiliary supporting surfaces on the water. Each of said disks is inclined towards the reference horizontal plane.

With the vehicle running ahead the disks are turned, with the result that the rate of contact of the disk lower surface with water is reduced considerably compared to that of contact with the fixed surface; thus the friction contact decreases, too.

However, the vehicle running speed is restricted by both the effects of cavitation and the required tractive characteristics of the disks as propulsive devices making use of the effects of sliding a relatively viscous fluid medium over the disk surface.

One more prior-art ground vehicle (DE 4,203,286) is known to have an annular lifting surface (airfoil) rotating at a high speed and lifting the vehicle off the ground.

The aforesaid ground vehicle is in fact a motor car provided with an annular airfoil and a drive to impart rotation thereto. The airfoil is situated under the motor car and has a top and a bottom surface. The bottom surface of the airfoil mounts devices for supplying a great amount of compressed air. A pusher propeller is used as a propulsive device.

The aforediscussed vehicle starts vertically due to discharging a great amount of compressed air on the bottom surface of the annular airfoil rotating at a high speed. During a straight flight said airfoil rotates at a low speed and performs similarly to the Frisby's disk ("the flying dishes for throwing"). The thrust required for a straight flight may be established by, e.g., a pusher propeller.

However, the technical solution discussed before fails to solve a problem of extending the range of the vehicle running and of using a low-density fuel due to a limited volumetric capacity of fuel compartments in the vehicle body.

A prior-art airborne vehicle (PCT/RU 94/00007) is known to have an annular airfoil which establishes the air-gas flow area of a ramjet engine.

The airborne vehicle which is in fact an aircraft is provided with an external suspension unit appearing as an airfoil carrying engines mounted thereon. The external suspension unit is articulated to the aircraft through supporting arms and comprises a landing gear and flight controls.

The airborne vehicle in question starts horizontally from a runway. The aircraft having an airfoil, and the external suspension unit appearing as an airfoil, establish a lift independently of each other. An aerodynamic drag offered by the aircraft and the external suspension unit during take-off is overcome also by both the aircraft engine and the engine on the external suspension unit. Under cruising flight conditions the external suspension unit and the aircraft which are arranged at the trimming angle to each other provide for high supersonic speed flight.

However, the aforementioned known airborne vehicle fails to solve the problem of a stable flight at low and extra-low speeds which involves very complicated airfoil mechanization; besides, the aircraft under consideration requires a runway to take off and land.

Disclosure of the Invention

The principal and essential object of the present invention is to provide a a transport vehicle with an aerodynamic module which makes it possible to considerably extend the range of run for a shorter travelling time and to reduce the weight of the construction as a whole.

The foregoing object is accomplished due to the fact that in a transport vehicle provided with an aerodynamic module, the latter appears as at least one toroidal body of revolution, whose cross section is essentially an aerodynamic one in the plane passing through the axis of revolution of said body, said aerodynamic section being oriented along the direction of running of the transport vehicle.

The aerodynamic module may be provided with at least one own engine.

The aerodynamic module may be provided with at least one own propulsive device.

It is expedient that the axis of rotation of the aerodynamic module is arranged at a substantially acute angle to the direction of travel of the transport vehicle.

The aerodynamic module may be secured on the transport vehicle with the aid of at least one main hinged joint having at least one degree of freedom and be provided with an actuator located on the transport vehicle for moving the aerodynamic module.

It is also expedient that the own engine of the aerodynamic module is positioned thereinside and that the longitudinal axis of said engine may be arranged at an acute angle to the axis of rotation of said aerodynamic module.

The aerodynamic module may be provided with aerodynamic controls appearing as movable airfoils adjacent to the aerodynamic module trailing edge along its closed perimeter. The aerodynamic controls may comprise elevators having their aerodynamic surfaces located in a close proximity to the trailing edge of the top airfoil; rudders having their aerodynamic surfaces situated close to the trailing edge of the side airfoil most removed from the vehicle center of gravity; and ailerons having their aerodynamic surfaces positioned in a close proximity to the trailing edge of the bottom airfoil.

When a hydrofoil craft is used as the transport vehicle, it is expedient to provide said craft with at least one platform having an aerodynamic cross section which establishes an airfoil, and spaced somewhat apart from the hull of the craft therebehind. The platform is associated with the craft through an articulated linkage unit which may comprise a pantograph.

The platform may be hollow and its frame is expedient to be shaped as a honeycombed structure. The hydrofoil craft may be provided with controls of the platform position relative to the hull of the craft.

The platform may be equipped with at least one curved hydrofoil held to an additional articulated linkage unit between the hull of the craft and the platform.

The platform supporting frame may be shaped as a closed container for holding fuel therein, composed of two intercommunicating spaces, an outer and an inner one. The outer space may be torus-shaped and arranged on the periphery, and at least one throttling device may be provided in the passage communicating the container spaces with each other.

When a motor car is used as the transport vehicle, it is reasonable that a platform is mounted on its roof, said platform carrying an aerodynamic module articulately linked to said platform and to the vehicle body.

The platform may be provided with an articulated linkage unit locked-in with the wheel axle necks of the vehicle undercarriage.

It is expedient that the link rod of the articulated linkage unit is hollow to be filled with a low-density fuel and is provided with a convergent-divergent (Laval) nozzle communicating with the hollow link rod through a diaphragm.

The roof of the motor car may be shaped as a platform, and the aerodynamic module be articulated thereto.

Brief Description of the Drawings

To promote understanding given below are some specific exemplary embodiments thereof to be read with reference to the accompanying drawings, wherein:

FIG.1 is a general view of a transport vehicle (yacht) with an aerodynamic module, according to the invention;
FIG.2 is a cross-sectional view of the aerodynamic module, according to the invention;

FIG.3 is a characteristic curve of the lift coefficient versus the angle of attack;
FIG.4 is a general view of a transport vehicle (hydrofoil craft) showing a local longitudinal section of the aerodynamic module;
FIG.5 is a plan view of FIG.4;
FIG.6 is a view of the craft afterbody and a platform associated therewith shown in a longitudinal section to demonstrate a honeycombed structure thereof;
FIG.7 is a longitudinal sectional view of the craft afterbody and the platform associated therewith and composed of two holding containers;
FIG.8 shows an articulated linkage unit through which the platform is held to the craft hull;
FIG.9 is a longitudinal sectional view of a hydrofoil craft with an aerodynamic module and a platform associated with the craft hull and the aerodynamic module;
FIG.10 is a view of FIG.9 showing the platform provided with its own engine, propulsive device, and an additional articulated linkage unit through which the platform is held to the craft hull;
FIG.11 a view of FIG.9 showing the platform provided with controls appearing as a pantograph;
FIG.12 presents a transport vehicle provided with an aerodynamic module appearing as two symmetrically arranged solids of revolution and a mounted platform;
FIG.13 illustrates the aerodynamic module in various positions in various operating modes;
FIG.14 is a sectional view of a transport vehicle (motor car) provided with an aerodynamic module; and
FIG.15 is a front view of FIG.14 showing various positions of the aerodynamic module while steering the transport vehicle.

Best Method of Carrying Out the Invention

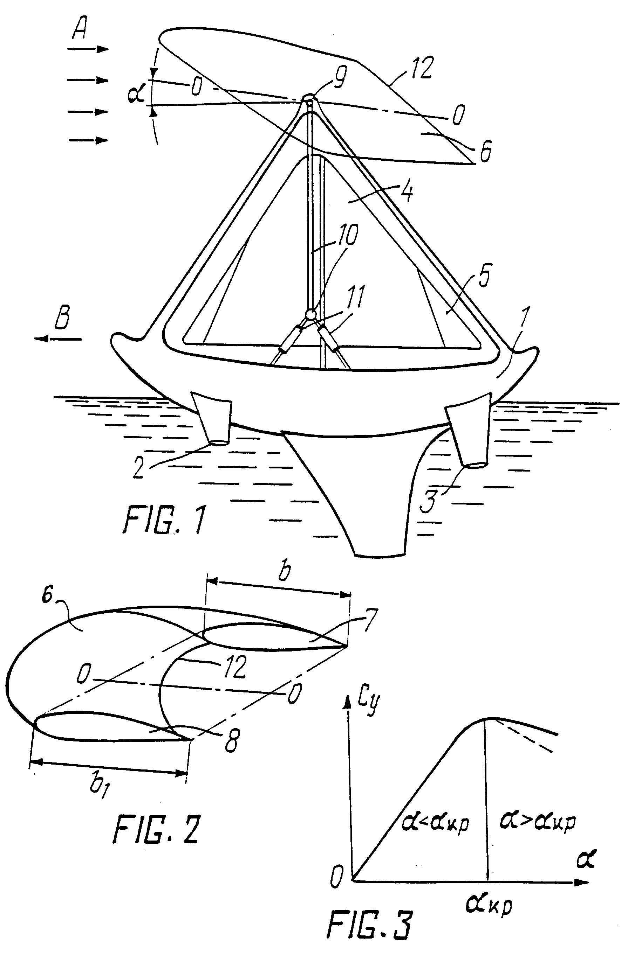

The transport vehicle, e.g., a yacht comprises a hull 1 (FIG.1) of a craft provided with a fore hydrofoil 2 and a tail hydrofoil 3, and a propulsive device 4 in the form of a sail which imparts motion to the craft when in displacement condition. The craft is steered with controls 5.

The transport vehicle is provided with an aerodynamic module 6. Both water and air can serve as the fluid medium. In the general case, the aerodynamic module 6 may be placed either in water or in air alone, or else both in water and air simultaneously. Besides, the aerodynamic module 6 may be placed at least partially in the same fluid medium as the transport vehicle itself.

The fluid medium, i.e., air in this particular case, approaches the aerodynamic module 6 in the direction facing an arrow A, and the transport vehicle, i.e., hydrofoil craft runs in the fluid medium, that is, water in the direction facing an arrow B.

The aerodynamic module 6 (FIG.2) is shaped as at least one toroidal body of revolution rotatable about an axis 00. Two, three, or more said solids of revolution may form the aerodynamic module 6 and be spaced somewhat apart from each another in tandem, alongside each other, etc.

For the sake of simplicity and better understanding, considered hereinbelow will be only one of the aforementioned toroidal solids of revolution.

A cross section of the toroidal body of revolution of the aerodynamic module 6 in the plane passing through the axis 00 of revolution thereof is essentially an aerodynamic profile (section) 7, 8 oriented along the direction of running of the transport vehicle when installing the aerodynamic module 6 on the transport vehicle. The aerodynamic profiles 7, 8 may be of different shapes in various planes passing through the axis 00. The aerodynamic profile 7 has a chord b, and the aerodynamic profile 8 has a chord $b_1$. The aerodynamic profiles 7, 8 in the aerodynamic module 6 have at least one angle of attack, and the direction of the chords b and $b_1$ may, e.g., coincide with the direction of the axis 00 of rotation. The aerodynamic profiles 7, 8 feature the same direction of the aerodynamic lift when streamed with an airflow A. The aerodynamic profiles 7, 8 may be of any kind, similar ones inclusive; however, taking account of the fact that they are to operate not only in a homogeneous (single-phase) medium but also in a heterogeneous (two-phase) medium, it is preferable that the aerodynamic profiles be of different kind and in different combinations, e.g., one being symmetrical and the other asymmetrical. To reduce a mutual interference of the aerodynamic profiles 7, 8 when streamed with the airflow A, the aerodynamic profile 8 may be displaced with respect to the aerodynamic profile 7 in the direction of travel of the transport vehicle. With a considerable increase in the velocity of the airflow A streaming the aerodynamic profile 8 in the region of high velocities, supersonic inclusive, and when the own propulsor thereof is located in the flow area of the toroidal body of revolution rotating about the axis 00, the aerodynamic profile 8 is to be displaced with respect to the aerodynamic profile 7 in the direction of travel of the transport vehicle. From the standpoint of aerodynamics, displacement of one aerodynamic profile 8 relative to the other aerodynamic profile 7 is preferable.

With a substantial increase in the geometry interference of one aerodynamic profile 8 with the other aerodynamic profile 7 decreases, and the amount of their relative displacement is reduced down to zero, which in turn results in a simplified manufacturing process of the aerodynamic module 6.

The aerodynamic module 6 has a closed airfoil. The construction of a closed airfoil has a lower weight and higher rigidity compared with that of a flat airfoil.

The aerodynamic module 6 is linked to a hull 1 (FIG.1) through at least one main hinged joint 9 having at least one degree of freedom. To promote understanding of the essence of this invention considered hereinbelow is at least one main hinged joint 9, though actually more than one such joint may be used depending on the number of the toroidal solids of revolution in the aerodynamic module 6. The hinged joint 9 may also have two or three degrees of freedom, though in this particular case it has at least one degree of freedom.

The axis 00 of rotation of the aerodynamic module 6 makes up an acute angle alpha with the direction B of travel of the transport vehicle. The aerodynamic module 6 has an actuator 10 to change the module position to suit the operating conditions. For displacing the aerodynamic module 6 in another direction relative to the hull 1 of the craft use is made of controls 11, while the actuator 10 is in fixed position.

Provision of the aerodynamic module 6 in the transport vehicle increases its efficiency at very low travelling speeds.

Higher efficiency of the transport vehicle is attained due to setting the aerodynamic module 6 at an acute angle alpha (FIG.1) to the direction B of travel of the transport vehicle larger than the critical angle of attack ($alpha_{cr}$) (FIG.3) in the immediate vicinity to the surface of e.g., water. The angle $alpha_{cr}$ is the angle of attack of the aerodynamic module (when streamed with an airflow) an increase in which does not cause the lift coefficient $C_L$ to increase. The functional relation $C_L = f(alpha)$ between the lift coefficient $C_L$ and the angle of attack (alpha) of the aerodynamic module in the presence of the ground effect demonstrate a slower decrease of the lift coefficient $C_L$ with an increase of the angle alpha (indicated with a solid line) than in the absence of the ground effect when the aerodynamic module is streamed with a fluid medium and the angle alpha increases (indicated with a dotted line).

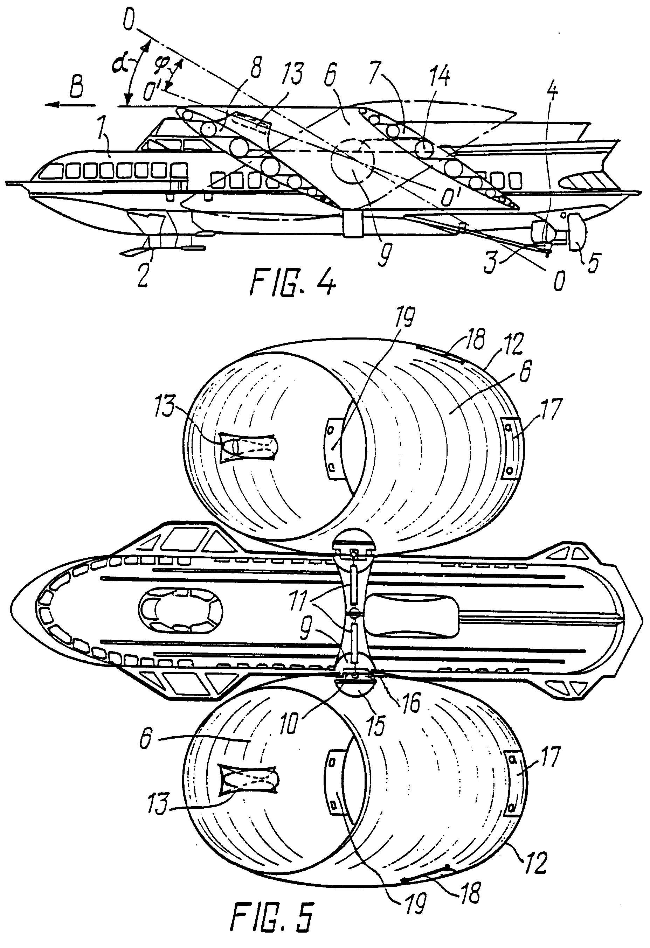

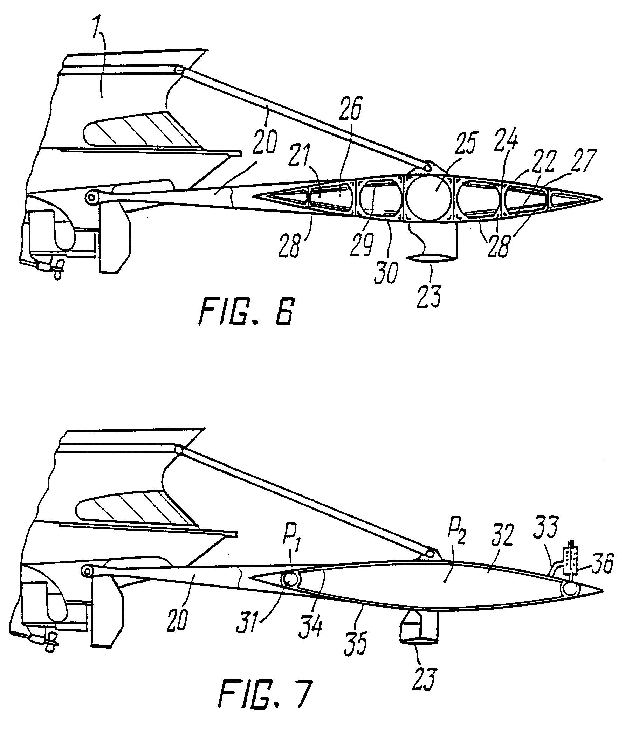

An exit trailing edge 12 of the aerodynamic module 6, closed along the perimeter, establishes, together with the water surface, the conditions of outflowing of the air mass from the flow area of the aerodynamic module 6 through an equivalent cylindrical surface, thus creating an additional air-cushion effect. To promote outflowing of the air mass from the flow area of the aerodynamic module 6 it has at least one own engine 13 (FIG.4). When in the initial position the aerodynamic module 6 makes up an angle alpha with the direction B of travel of the transport vehicle (hydrofoil craft), and its aerodynamic profiles 7, 8 have respective chords b, $b_1$ which are, e.g., parallel to the axis 00 of rotation of the solid of revolution and hence are set at the same angle alpha. The magnitudes of said angles of attack exceed that of the angle $alpha_{cr}$.

In order to increase the degree of unevenness and of control over the form of pressure field on the airfoils of the aerodynamic module 6, its own, preferably gas-turbine engine 13 is provided on a concave surface established by rotating the aerodynamic profile 7 (8) round the axis 00. The longitudinal axis 00 of the gas-turbine engine 13 makes up an acute angle phi with the axis 00 of rotation of the body of revolution of the aerodynamic module 6.

The aerodynamic module 6 comprises a frame 14 made up of held-together hollow housings shaped as variable-curvature tori inscribed in the aerodynamic profiles 7, 8. The torus-shaped hollow housings are used as additional fuel containers featuring an excess pressure thereinside. Said containers are preferable to be filled with a low-density fuel so as to attain a high value of the weight factor of the structures of the aerodynamic module 6.

Multiplicity of operating modes resulting from changing the position of the aerodynamic module 6 (FIG.4) in the acceleration phase of a transport vehicle (hydrofoil craft in this particular case) provides for a change in the lift value and the aerodynamic drag value of the airfoils of the aerodynamic module 6. The position of the aerodynamic module 6 (FIG.4) in the acceleration phase of the transport vehicle is indicated with a solid line, while its position in the cruise phase of the transport vehicle is shown with a dash-and-dot line. To this aim the aerodynamic module 6 is provided with a main hinged joint 9 having at least one degree of freedom, though it may have more such degrees of freedom.

The hinged joint 9 comprises an articulation device 15 (FIG.5) aimed at longitudinally turning the aerodynamic module 6 from the actuator 10, said device appearing as, e.g., a step motor. The actuator 10 is enclosed in the housing of the main hinged joint 9, said housing being, e.g., spherical in shape. A second degree of freedom of the main hinged joint 9 is provided by a device 16 which is intended to displace the aerodynamic module 6 transversely through the use of the controls 11 of the hydraulic systems of the hydrofoil craft.

The aerodynamic module 6 may comprise aerodynamic controls of the transport vehicle which may appear as movable aerodynamic surfaces serving as elevators 17, rudders 18, and ailerons 19 and located at the exit trailing edge 12 of the aerodynamic module 6 along the perimeter thereof. The aerodynamic controls are to ensure directional and longitudinal stability, as well as steerability of the craft.

Aerodynamic control of the transport vehicle provided with the aerodynamic module 6 is effected by the elevators 17, the rudders 18, and the ailerons 19. Inasmuch as the aerodynamic module 6 can assume various positions, the controls are determined according to the position of the aerodynamic module 6 in the cruise mode as follows: serving as the elevators 17 are the aerodynamic surfaces situated in the vicinity of the trailing edge 12 of the top airfoil 7; serving as the rudders 18 are the aerodynamic surfaces situated in the vicinity of the trailing edge 12 of the side airfoil (omitted in the drawing) which is most removed from the vehicle center of gravity; and serving as the ailerons 19 are the aerodynamic surfaces situated in the vicinity of the trailing edge 12 of the bottom airfoil 8.

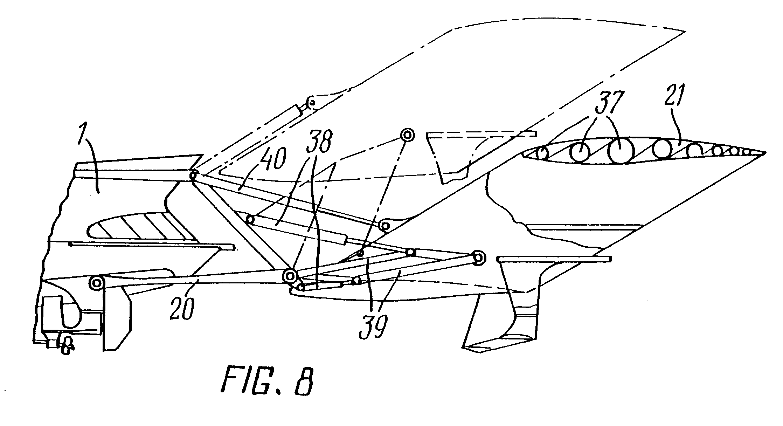

To extend the range of vehicle unrefuelled travel, it is necessary to increase the total fuel content on board the craft. It is preferable to use low-density fuel so as not to affect the craft's habitability. The craft equipped with the aerodynamic module 6 may additionally be provided with an articulated linkage unit 20 (FIG.6) situated on the hull 1, and an aerodynamic-configuration mounted platform 21 having airfoils 22.

The platform 21 is spaced somewhat apart from and behind the hull 1 of the craft provided with the aerodynamic module 6 and having the shallowly submerged fore hydrofoil 2 (FIG.4) and tail hydrofoil 3. The platform 21 (FIG.6) is intended for craft propulsion in displacement condition and on shallowly submerged hydrofoils 23 which are held to the bottom airfoil 22 of the platform 21.

To suit the various operating conditions the craft has a set of the different-construction mounted platforms 21. When travelling along, e.g., an obstructed channel, the platform 21 may have its frame 24 of a honeycombed structure whose cells 25 accommodate similar-curvature containers 26, e.g., spherical ones having top ends 27 and bottom ends 28, both being inscribed in the aerodynamic profiles of the platform 21. The honeycombed structure of the frame 24 and the airfoils 22 incorporate a top readily-detachable cover-plate 29 and a bottom readily-detachable cover-plate 30 of each cell 25, both cover-plates being intended for the low-density fuel to escape in the opposite directions from the destructed container 26 in emergency situations and for preventing other fuel containers 26 from destruction.

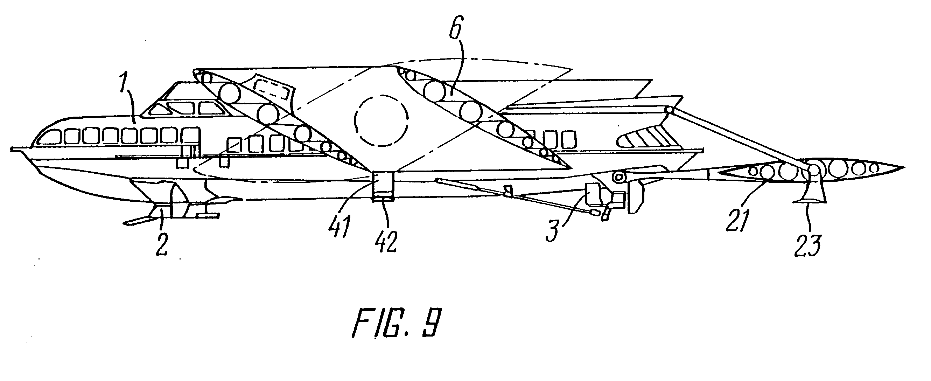

When a hydrofoil craft provided with the aerodynamic module 6 is to operate on an extended-length shipping line, use is made of the mounted platform 21 having its interior to a maximum extent filled with fuel, predominantly a low-density one. In such a case a frame 31 (FIG.7) of the mounted platform 21 may be shaped as a closed container 32 which may comprise two spaces $P_1$ and $P_2$ intercommunicating through a passage 33.

The outer space $P_1$ is torus-shaped and is located along the periphery of the platform 21, while the inner space $P_2$ is established by the surface of the torus and curvilinear walls of the platform 21. A throttling device 36 is provided in the passage 33 for throttling the fuel, preferably the low-density one, from one space to the other, wherein the excess pressure is lower.

When the hydrofoil craft (FIG.8) provided with the aerodynamic module 6 is to perform special, e.g., rescue functions, the mounted platform 21 is expedient to be hollow. The frame of the hollow platform 21 may be made up of a number of hollow housings 37 shaped as different-curvature tori held together. The torus-shaped hollow housing 37 are used as additional fuel containers having an excess pressure thereinside. The platform 21 may be provided with control members 38 for control of its position with respect to the craft hull 1. The platform 21 ma be linked to the hull 1 through a pantograph 39 which does not interfere with changing the angle of attack of the platform 21 by controls 40.

When the hydrofoil craft is used as a transport vehicle, it may comprise a number of the mounted platforms 21.

To provide the necessary performance characteristics of a hydrofoil craft equipped with the aerodynamic module 6 (FIG.9), the aerodynamic module 6 itself is detachable and can be mounted on a base transport vehicle. To this end, the aerodynamic module 6 is mounted with the aid of a fixing strap 41 (FIG.9) made of, e.g. a high-strength fibrous composite material and carrying a shallowly submerged ring-shaped hydrofoil 42 which is less submerged than the fore hydrofoil 2 and the tail hydrofoil 3. Whenever it becomes necessary, reasoning from the performance characteristics, the aerodynamic module 6 may be provided with at least one own propulsor (omitted in FIG.9) mounted on the hydrofoils 42 in the area of an increased pressure.

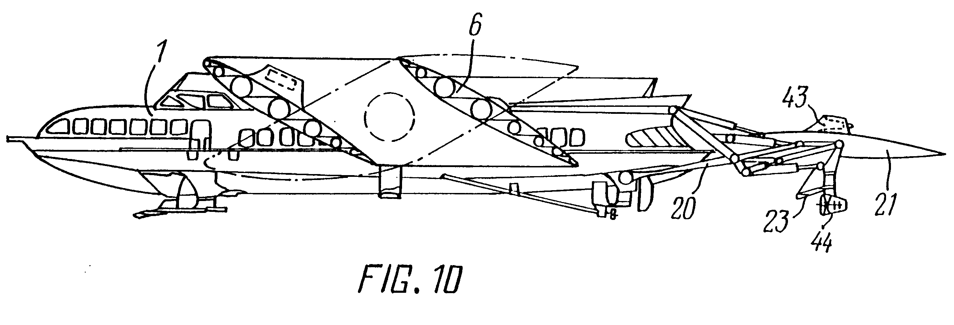

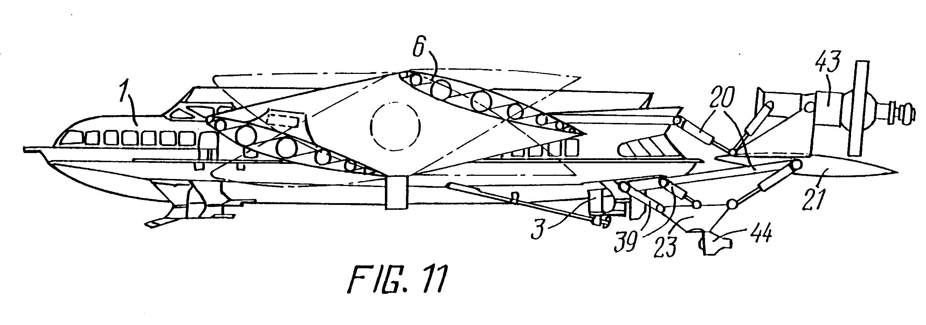

Furthermore, one of own engines 43 (FIGS.10, 11) of the aerodynamic module 6 and one of its own propulsive devices 44 may be installed on the mounted platform 21. The own power plant of the aerodynamic module 6 comprises the engine 43 fixed on the top surface of the mounted platform 21, while the propulsive device 44 is located under the bottom surface of the mounted platform 21 in the area of an increased pressure of the shallowly submerged hydrofoil 23.

The hydrofoil craft provided with the aerodynamic module 6 comprises the mounted platform 21 (FIG.11), whereon its own high-thrust power plant may be installed, which is of a combination type and may comprise one of its own propulsive devices LL operating in the air medium. In this craft the mounted platform 21 may be provided with the hydrofoil 23 having a radius of transverse curvature (omitted in the drawing) and a reduced length of chord towards the direction of deeper submersion. The hydrofoil 23 (FIG.11) is secured on the pantograph-type mechanism 39 of the additional articulated linkage unit 20. The hydrofoil 23 is interposed between the hull 1 of the transport vehicle provided with the aerodynamic module 6 and the mounted platform 21, and is more deeply submerged than the tail shallowly submerged hydrofoil 3 of the transport vehicle.

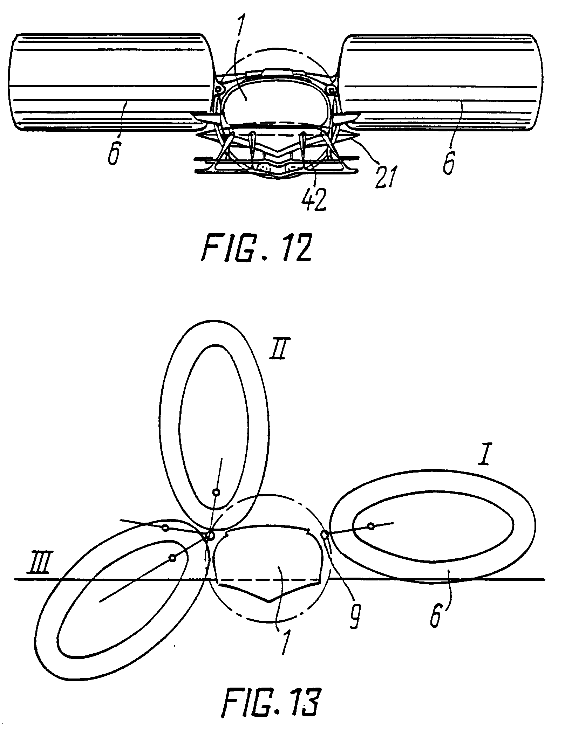

The transport vehicle provided with the aerodynamic module 6 (FIG.12) and equipped with the mounted platform 21 allows of using the same aerodynamic profile of the lower portions of the aerodynamic module 6 and of the mounted platform 21, said aerodynamic profile having an increased relative thickness compared with that of the upper portion of the airfoil of the aerodynamic module 6, because the lower portion of the airfoil is streamed with a two-phase turbulent flow, wherein dispersion of water particles is rather high.

The aerodynamic module 6 (FIG.13) can change its position depending on the mode of operation (positions I, II, and III).

FIG.13 presents schematically the transport vehicle whose hull 1 is provided with two aerodynamic modules 6.

When in position I both modules 6 are turned in the hinged joint 9 towards the horizontal position of the longitudinal axis and are thus in the cruising mode of operation.

When in position II one aerodynamic module 6 is raised and the other module is in position I of cruising speed. In this case the pathway of the transport vehicle travelling at a high speed under the effect of a maximum aerodynamic force is changed, or mooring at a low speed is carried out.

When in position III the aerodynamic module 6 is turned in the hinged joint 9 downwards to provide rescue or repair work in emergency situations.

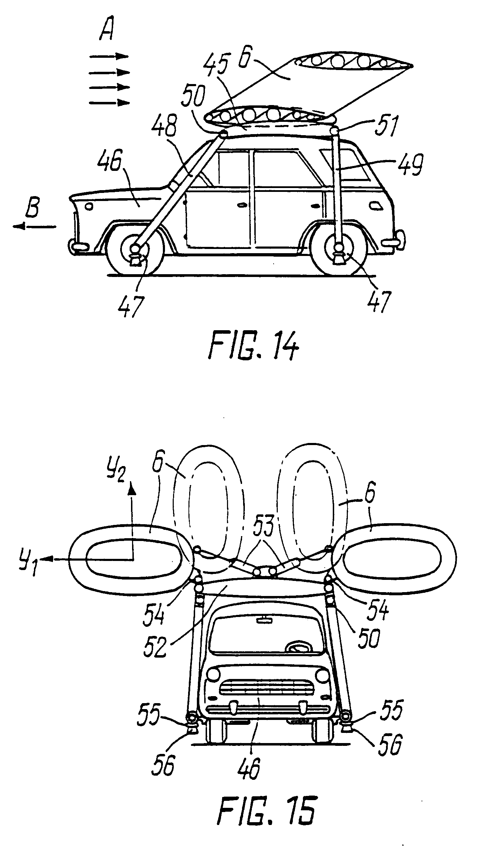

When a motor car (FIG.14) is used as the transport vehicle, a platform 45 is secured on the roof thereof, and the aerodynamic module 6 is placed on said platform, said module being linked to said platform 45 and to a car body 46 through an articulated linkage mechanism. The platform 45 can change its position with respect to the incoming airflow A and hence the magnitude of the angle alpha of attack of the aerodynamic module 6. The platform 45 is a mounted one with respect to the car body 46, being held to the necks of the necks of the wheel axles of a vehicle undercarriage 47 with the aid of hollow front bars 48 and rear bars 49. The front bars 48 are adjustable for length and are linked to the platform 45 through cardan joints 50, while the rear bars 49 of said articulated linkage mechanism are of fixed length and are linked to the platform 45 through a cardan joint 51. The platform 45 may be hollow. The construction of the platform 45 (FIG.15) incorporates at least one increased-rigidity member 52 appearing as a disk-shaped tank for a low-density fuel under pressure, the structural configuration of said tank being represented in FIG.7 hereinbefore. However, it should be noticed that such increased-rigidity members may be two, three, or more. The platform 45 (FIG.14) and the car body 46 are mutually displaceable when the car body 46 is held to a spring hanger with respect to the undercarriage 47. The platform 45 may be built into the transport vehicle construction. The car roof is in fact the platform 45, and the aerodynamic module 6 is articulated thereto. It is preferable, however, that the roof appears as a disk-shaped tank for a low-density fuel under pressure, the structural configuration of said tank being represented in FIG.7 hereinbefore. According to another embodiment, the platform 45 may be hollow so as to hold a low-density fuel and be built into the body through the side frame of the door apertures in order to impart more rigidity to the car body for installing the aerodynamic module 6 thereon.

Controls 53 are provided for displacing the aerodynamic module 6 composed of two toroidal solids of revolution, with respect to a hinged joint 54. The aerodynamic profiles of the toroidal solids of revolution feature different direction of magnitude of the aerodynamic lift, e.g., in the mutual square planes. The magnitude of the resultant lift in each direction $y_1$ and $y_2$ enables one to use the module housing shaped as the car body on the undercarriage 47, having the weight and geometric configuration inherent in transport vehicles not only for off-the-road operation (position I of the aerodynamic module 6 in FIG.13) but also for transport vehicles operating under road traffic conditions (position II of the aerodynamic module 6 in FIG.13).

Aerodynamic controls are used for directional and longitudinal stability and steerability at low deviations.

The transport vehicle, e.g., a motor car, provided with the aerodynamic module 6 may comprise a system of avoiding a head-on collision with, e.g., another transport vehicle. The system incorporates the hollow front bars 48 and rear bars 49 intended for holding therein a low-density fuel, e.g., gaseous hydrogen under pressure, a positively bursting diaphragm 55, and a supersonic (Laval) nozzle 56 provided on each of the bars 48 and 49. The system is synchronized with the control units (herein and hereinafter omitted in the drawing) in response to a signal from the electronic control unit of the automatic control system of the transport vehicle, and comprises pyrotechnical cartridges and control members changing the position of the aerodynamic module 6.

The aforedescribed system together with the aerodynamic module 6 allows of avoiding a head-on collision of a transport vehicle, e.g., a motor car, as follows. An electric pulse is applied to the pyrotechnical cartridge located on the positive bursting diaphragm 55 to fire said cartridge, with the result that the propulsive fluid is admitted to pass under high pressure to the interior of the supersonic nozzle, thus creating a thrust therein that causes the transport vehicle to ascend abruptly. Once the emergency situation has been over, the transport vehicle is returned to the initial position by changing the thrust appropriately.

The transport vehicle provided with the aerodynamic module 6 may be embodied in a combination version, i.e., as a base transport vehicle with a limited range of travel, carrying the detachable aerodynamic module 6, or a the construction of a transport vehicle may incorporate a lifting system with the aerodynamic module 6, thus establishing a new transport vehicle featuring new properties.

Industrial Applicability

The herein-proposed invention can find widespread application in transport vehicle engineering both for developing new transport vehicles provided with the herein-proposed aerodynamic module and for updating the old ones.

Use of the herein-proposed aerodynamic module in conjunction with any transport vehicle makes it possible to considerably extend the range of travel of transport vehicles and to substantially curtail the travelling time.

The efficiency of the herein-proposed invention is much increased after the transport vehicle will have changed over to such promising kinds of fuel as methane, hydrogen, natural gas, and so on.

## Claims

1. A transport vehicle provided with an aerodynamic module, CHARACTERIZED in that an aerodynamic module (6) appears as at least one toroidal body of revolution, whose cross section is essentially an aerodynamic one in the plane passing through the axis 00 of revolution of said body, said aerodynamic section being oriented along the direction of running of the transport vehicle.

2. A transport vehicle provided with an aerodynamic module as set forth in claim 1, CHARACTERIZED in that the aerodynamic module (6) is provided with at least one own engine (13).

3. A transport vehicle provided with an aerodynamic module as set forth in claim 2, CHARACTERIZED in that the aerodynamic module (6) is provided with at least one own propulsive device.

4. A transport vehicle provided with an aerodynamic module as set forth in claim 1, CHARACTERIZED in that the axis 00 of rotation of the aerodynamic module (6) is arranged at a substantially acute angle (alpha) to the direction (B) of travel of the transport vehicle.

5. A transport vehicle provided with an aerodynamic module as set forth in claim 1, CHARACTERIZED in that the aerodynamic module (6) is secured on the transport vehicle with the aid of at least one main hinged joint (9) having at least one degree of freedom, and is provided with an actuator (10) located on the transport vehicle for the aerodynamic module (6) to displace.

6. A transport vehicle provided with an aerodynamic module as set forth in claim 2, CHARACTERIZED in that an own engine (13) thereof is positioned inside the aerodynamic module (6) and the longitudinal axis of the engine (13) is arranged at an acute angle to the axis 00 of rotation of said aerodynamic module (6).

7. A transport vehicle provided with an aerodynamic module as set forth in claim 1, CHARACTERIZED in that the aerodynamic module (6) is provided with aerodynamic controls (17, 18, 19) of the transport vehicle appearing as movable airfoils adjacent to a trailing edge (12) of the aerodynamic module (6) along a closed perimeter of the trailing edge.

8. A transport vehicle provided with an aerodynamic module as set forth in claim 7, CHARACTERIZED in that the aerodynamic controls (17, 18, and 19) comprise elevators (17) having their aerodynamic surfaces located in a close proximity to the trailing edge (12) of the top airfoil; rudders (18) having their aerodynamic surfaces situated close to the trailing edge of the side airfoil most removed from the vehicle center of gravity; and ailerons (19) having their aerodynamic surfaces positioned in a close proximity to the trailing edge (12) of the bottom airfoil.

9. A transport vehicle provided with an aerodynamic module as set forth in claim 1, CHARACTERIZED in that when hydrofoil craft are used as the transport vehicle, it is provided with at least one platform (21) which has an aerodynamic cross section, thus establishing an airfoil (22) and is spaced somewhat apart from a hull (1) of the craft therebehind, said platform being linked to the craft hull through an articulated linkage unit (20).

10. A transport vehicle provided with an aerodynamic module as set forth in claim 9, CHARACTERIZED in that the articulated linkage unit comprises a pantograph.

11. A transport vehicle provided with an aerodynamic module as set forth in claim 9, CHARACTERIZED in that the platform (21) is hollow.

12. A transport vehicle provided with an aerodynamic module as set forth in claim 11, CHARACTERIZED in that a frame (24) of the platform (21) appears as a honeycombed structure.

13. A transport vehicle provided with an aerodynamic module as set forth in claim 11, CHARACTERIZED in that a frame (31) of the platform (21) appears as a closed container (32) for holding fuel therein, composed of two intercommunicating spaces, an outer ($P_1$) and an inner ($P_2$) one, the outer space being torus-shaped and arranged peripherally, and at least one throttling device (36) is provided in a passage (33) communicating the container spaces ($P_1$ $P_2$) with each other.

14. A transport vehicle provided with an aerodynamic module as set forth in claim 9, CHARACTERIZED in that the hydrofoil craft is provided with control members (38) for control of the position of the platform (21) relative to the hull (1) of the craft.

15. A transport vehicle provided with an aerodynamic module as set forth in claims 9 and 14, CHARACTERIZED in that the platform (21) is equipped with at least one curved hydrofoil (23) held to an additional articulated linkage unit (20) between the hull (1) of the craft and the platform (21).

16. A transport vehicle provided with an aerodynamic module as set forth in claim 1, CHARACTERIZED in that when a motor car is used as the transport vehicle, at least one platform (45) is mounted on the motor car roof, said platform carrying the aerodynamic module (6) articulately linked to said platform (45) and to a body (46) of the motor car.

17. A transport vehicle provided with an aerodynamic module as set forth in claim 16, CHARACTERIZED in that the platform (45) is provided with articulated linkage units (50, 51) locked-in with the wheel axle necks of a motor car undercarriage (47).

18. A transport vehicle provided with an aerodynamic module as set forth in claim 17, CHARACTERIZED in that link rods (48, 49) of each respective articulated linkage unit (50, 51) are hollow to be filled with a low-density fuel and are provided with a convergent-divergent (Laval) nozzle (56) communicating with the hollow link rods (48, 49) through a diaphragm (55).

19. A transport vehicle provided with an aerodynamic module as set forth in claim 16, CHARACTERIZED in that the roof of the motor car is shaped as the platform (45), and the aerodynamic module (6) is articulated thereto.

FIG. 1

FIG. 2

FIG. 3

FIG. 4

FIG. 5

FIG. 6

FIG. 7

11

FIG. 8

FIG. 9

EP 0 760 338 A1

EP 0 760 338 A1

FIG. 10

FIG. 11

EP 0 760 338 A1

FIG. 12

FIG. 13

FIG. 14

FIG. 15

17

## INTERNATIONAL SEARCH REPORT

| International application No. |
| --- |
| PCT/RU96/00017 |

**A. CLASSIFICATION OF SUBJECT MATTER** IPC6 :

B64C 39/06, B64C 35/00, B64C 37/00, B60F 5/02, B63B 1/34

According to International Patent Classification (IPC) or to both national classification and IPC

**B. FIELDS SEARCHED**

Minimum documentation searched (classification system followed by classification symbols) IPC -6

B63B 1/00, B63B 1/32, B63B 1/34, B64C 35/00, B64C 37/00, B64C 39/00, B64C 39/06, B63H 9/06, B60F 5/02

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | EP, A1, 0601212, (GERMAN DEMIDOV et al), 15 June 1994 (15.06.94) | 1-3,7,8 |
| A | SU, A, 28786, (A.D. NADIRADZE), 31 December 1932 (31.12.32) | 1-3 |
| A | SU, A, 83966, (M.A. ALEINIKOV), 16 July 1959 (16.07.59) | 1-3 |
| A | SU, A1, 1803347, (V.I. DEMIDCHENKO et al), 23 March 1993 (23.03.93) | 1,5 |
| A | SU, A1, 1810232, (E. SHIRSHOV), 23 April 1993 (23.04.93) | 1,8,9 |
| A | SU, A1, 835023, (JU.V. AKSENOV et al), 23 June 1992 (23.06.92) | 1,8,9,11 |
| A | SU, A1, 1630958, (MOSKOVSKY AVIATSIONNY INSTITUT), 28 February 1991 (28.02.91) | 1,9 |
| A | US, A, 3494575, (DAVID BUDWORTH LIMITED), 10 February 1970 (10.02.70) | 1-5,16 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance: the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance: the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 March 1996 (21.03.96) | 09 April 1996 (09.04.96) |

| Name and mailing address of the ISA/ RU | Authorized officer |
| --- | --- |
| Facsimile No. | Telephone No. |

Form PCT/ISA/210 (second sheet) (July 1992)